# EUROPÄISCHE PATENTSCHRIFT

(11) **EP 1 371 482 B1**
(45) Veröffentlichungstag und Bekanntmachung des Hinweises auf die Patenterteilung: **16.11.2005**
(21) Anmeldenummer: 02405489.2
(22) Anmeldetag: 13.06.2002
(51) Int. Cl.: B32B 27/32, B65D 65/40, G03H 1/02, B32B 3/30

(54) **Verfahren zur Herstellung eines Tubenlaminates**
Preparation process of a tube laminate
Procédé de préparation d'un stratifié en forme de tube

(43) Veröffentlichungstag der Anmeldung: 17.12.2003
(73) Patentinhaber: Alcan Technology & Management Ltd., 8212 Neuhausen am Rheinfall (CH)
(72) Erfinder: Hummel, Otto, 78224 Singen (DE)

(56) Entgegenhaltungen:
- EP-A- 0 622 181
- EP-A- 0 939 037
- WO-A-01/45939
- WO-A-01/64434
- WO-A-98/26930
- US-A1- 2002 003 635

## Beschreibung

Die Erfindung betrifft ein Verfahren zur Herstellung eines mehrschichtigen Tubenmaterials nach dem Oberbegriff von Anspruch 1.

Bekannt Tuben für Zahnpasta sowie für kosmetische, pharmazeutische und andere hochwertige Produkte weisen eine Tubenkörper aus einem mehrschichtigen Material, dem sogenannten Tubenlaminat, auf. Zur Hemmung des Durchtritts von Wasserdampf und Gasen sind die Tubenlaminate mit einer sogenannten Barriereschicht ausgestattet. Zur Erzeugung eines besonderen Designs, aber auch zur Erhöhung der Fälschungssicherheit, ist es zudem bekannt, durch den Einbau eines durch eine Mikroprägung erzeugten Musters in das Tubenlaminat einen optischen Effekt in der Form eines Hologrammes oder eines hologrammähnlichen Erscheinungsbildes zu bewirken.

Tubenlaminate mit integriertem Hologramm wurden bis anhin durch Einbau einer Hologramm-Trägerfolie in das mehrschichtige Tubenmaterial hergestellt. Ein wesentlicher Nachteil dieses Verfahrens liegt in der schlechten Haftung des Hologramm-Trägerlackes zu den bei der Herstellung von Tubenlaminaten eingesetzten Kaschiermitteln. Die schlechte Haftung führt bereits nach kurzer Zeit zu einer Delaminierung einzelner Schichten des Tubenlaminates.

Ein Verfahren der eingangs genannten Art ist aus der WO-A-0145939 bekannt. Bei dem mehrschichtigen Tubenmaterial ist die das Hologramm aufnehmende Schicht die äusserste Materialschicht. Die Prägung des Hologramms erfolgt am fertigen Tubenmaterial.

Die EP-A-0 939 037 offenbart ein aus mehreren Schichten aufgebautes Tubenmaterial, wovon eine der Schichten eine ganz- oder teilflächig geprägte Metallfolie oder metallisierte Kunststofffolie ist. Mit der Prägung ergibt sich ein hologrammähnliches Erscheinungsbild.

Aus der EP-A-0 622 181 ist ein aus mehreren Schichten aufgebautes Tubenlaminat bekannt. Eine der Schichten besteht aus einer Trägerfolie, die zur Erzeugung von Barriereeigenschaften mit einer keramischen Schicht aus beispielsweise SiOₓ beschichtet ist.

Der Erfindung liegt die Aufgabe zugrunde, ein Verfahren zur Herstellung eines mehrschichtigen Tubenmaterials der eingangs genannten Art bereitzustellen, mit welchem die bei Tubenlaminaten mit herkömmlichen Hologramm-Trägerfolien beobachtete Delaminierung ausgeschaltet werden kann.

Zur erfindungsgemässen Lösung der Aufgabe führt ein Verfahren mit den Merkmalen von Anspruch 1.

Bei einer ersten Variante des erfindungsgemässen Verfahrens ist die zu prägende Folie eine als Barriereschicht dienende Metallfolie, vorzugsweise eine Aluminiumfolie.

Bei einer zweiten Variante des erfindungsgemässen Verfahrens ist die zu prägende Folie eine Kunststofffolie mit einer einseitig angeordneten Barriereschicht, vorzugsweise eine keramische Beschichtung aus SiOₓ, wobei die Folie auf der der Barriereschicht entgegengesetzten Seite geprägt und auf dem geprägten Muster eine Schicht aus Metall, vorzugsweise aus Aluminium, angeordnet ist.

Bei einer dritten Variante des erfindungsgemässen Verfahrens ist die zu prägende Folie eine Kunststofffolie und auf dem geprägten Muster ist eine Schicht aus Metall, vorzugsweise aus Aluminium, angeordnet, wobei als Barriereschicht eine Metallfolie, vorzugsweise eine Aluminiumfolie, angeordnet ist.

Ein nach der ersten Verfahrensvariante hergestelltes mehrschichtiges Tubenmaterial zeichnet sich bevorzugt durch den folgenden Schichtaufbau aus:
- wenigstens eine ein- oder mehrlagige, zumindest in Teilbereichen transparente Kunststoffschicht,
- eine Metallfolie mit einer Mikroprägung auf der Seite der Kunststoffschicht, und
- wenigstens eine funktionelle Schicht aus einer ein- oder mehrlagigen Kunststoffschicht.

Ein nach der zweiten Verfahrensvariante hergestelltes mehrschichtiges Tubenmaterial zeichnet sich bevorzugt durch den folgenden Schichtaufbau aus:
- wenigstens eine ein- oder mehrlagige, zumindest in Teilbereichen transparente Kunststoffschicht,
- eine Kunststofffolie mit einer Mikroprägung und einer auf dem geprägten Muster angeordneten Schicht aus Metall auf der Seite der Kunststoffschicht und mit einer Barriereschicht aus SiOₓ auf der der Mikroprägung entgegengesetzten Seite der Folie, und
- wenigstens eine funktionelle Schicht aus einer ein- oder mehrlagigen Kunststoffschicht.

Bevorzugt ist die an die metallische Schicht angrenzende Kunststoffschicht eine Lackkaschierschicht oder eine Extrusionskaschierschicht.

Auf der Barriereschicht aus SiOₓ ist bevorzugt ein Haftvermittler, vorzugsweise eine Chromschicht, und zwischen dem Haftvermittler und einer funktionellen Schicht vorzugsweise eine Extrusionskaschierschicht angeordnet.

Ein nach der dritten Verfahrensvariante hergestelltes mehrschichtiges Tubenmaterial zeichnet sich durch den folgenden Schichtaufbau aus:
- wenigstens eine ein- oder mehrlagige, zumindest in Teilbereichen transparente Kunststoffschicht,
- eine Kunststofffolie mit einer Mikroprägung und einer auf dem geprägten Muster angeordneten Schicht aus Metall auf der Seite der Kunststoffschicht,
- wenigstens eine funktionelle Schicht aus einer ein- oder mehrlagigen Kunststoffschicht, und
- eine zwischen dem geprägten Muster und der funktionellen Schicht angeordnete Metallfolie, vorzugsweise eine Aluminiumfolie, als Barriereschicht.

Die an die metallische Schicht angrenzende Kunststoffschicht ist bevorzugt eine Lackkaschierschicht oder eine Extrusionskaschierschicht. Ebenso ist bevorzugt zwischen der Kunststofffolie mit der Mikroprägung und der Metallfolie sowie zwischen der Metallfolie und einer funktionellen Schicht eine Lackkaschierschicht oder eine Extrusionskaschierschicht angeordnet.

Die zumindest in Teilbereichen transparente Kunststoffschicht bildet bei den aus dem Tubenmaterial hergestellten Tubenkörpern die Aussenseite. Durch die transparenten Teilbereiche eintretende Lichtstrahlen treffen auf das geprägte Muster auf und führen durch Interferenz mit den an der auf dem geprägten Muster angeordneten Schicht aus Metall reflektierten Lichtstrahlen zu dem gewünschten optischen Effekt. Die Kunststoffschicht kann gefärbt oder bedruckt sein.

Als Metallfolie eignet sich beispielsweise Eisen-, Kupfer-, Silber-, Gold- und Aluminiumfolie, wobei letztere bevorzugt wird. Die Folie weist eine Dicke von etwa 6 bis 40 µm auf.

Die zu prägenden Kunststofffolien bestehen beispielsweise aus Polyamid, Polyester, Polyolefin, Polyvinylchlorid oder Polycarbonat. Die Dicke der verwendeten Kunststofffolien liegt etwa zwischen 7 und 100 µm. Eine auf die mit einer Mikroprägung versehene Seite der Kunststofffolie als Reflexions- oder Spiegelschicht aufgetragene Metallschicht weist üblicherweise eine Dicke von etwa 5 bis 500 nm auf und kann mit bekannten Metallisierungsverfahren, z.B. durch physikalische oder chemische Dünnschichtabscheidung von Eisen, Nickel, Chrom, Kupfer, Silber, Gold, Aluminium oder auch anderen Metallen im Vakuum, beispielsweise durch Sputtern erzeugt werden.

Die auf der Metallfolie oder auf der Kunststofffolie angeordnete Mikroprägung wird beispielsweise über eine entsprechende Negativform mit einer Prägewalze direkt auf die Folie übertragen.

Zur Erzielung einer guten Durchtrittssperrwirkung für Wasserdampf und Gase mit einer keramischen Schicht aus SiOₓ, wobei x eine Zahl zwischen 0,9 und 2, vorzugsweise einer Zahl zwischen 1,5 und 1,8 ist, wird die als Substrat eingesetzte Kunststofffolie beispielsweise mittels Elektronenstrahl-Bedampfen mit SiO_{1,8} in einer Dicke von etwa 50 bis 150 nm beschichtet. Ein auf der Barriereschicht aus SiOₓ vorgesehener Haftvermittler in der Form einer dünnen Metallschicht aus beispielsweise Chrom, Aluminium, Nickel, Titan, Eisen oder Molybdän weist bevorzugt eine einer monoatomaren Belegung entsprechende Schichtdicke von etwa 0,1 bis 0,5 nm auf. Die bevorzugte Beschichtung mit Chrom erfolgt beispielsweise mittels einer Sputterkathode in einer Argon-Atmosphäre.

Geeignete Kunststoffe für die ein- oder mehrlagige, die Aussenseite der aus dem Tubenmaterial hergestellten Tubenkörper bildende Kunststoffschicht und für die aus einer ein- oder mehrlagigen Kunststoffschicht bestehenden, die Innenseite von Tubenkörpern bildenden funktionellen Schichten sind bevorzugt thermoplastische Kunststoffe, insbesondere Polyolefine, vorzugsweise Polyethylene, Polypropylene sowie Copolymerisate mit Ethylen oder Propylen als einem der Monomerbestandteile. Lackkaschierschichten und Extrusionskaschierschichten enthalten ebenfalls Polyolefine oder bestehen aus Copolymeren mit Ethylen oder Propylen als eimem der Monomerbestandteile.

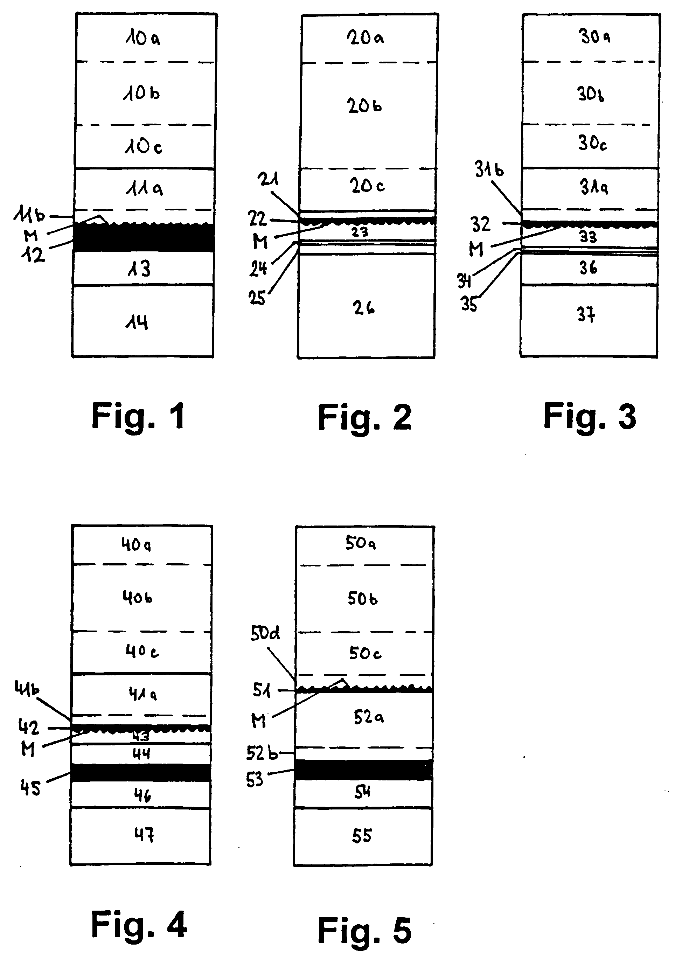

Weitere Vorteile, Merkmale und Einzelheiten der Erfindung ergeben sich aus der nachfolgenden Beschreibung bevorzugter Tubenlaminate in Verbindung mit der Zeichnung; diese zeigt schematisch in
- Fig. 1 bis 5 den Aufbau der in den Beispielen näher charakterisierten Tubenlaminate.

In den Beispielen werden die folgenden Abkürzungen verwendet:
- PE: Polyethylen
- PET: Polyethylenterephtalat
- LMDPE: lineares Polyethylen mittlerer Dichte (0,926 - 0,940 g/cm³)
- E: Ethylen als Monomerkomponente in Copolymeren
- AA: Acrylsäure als Monomerkomponente in Copolymeren

### Beispiel 1

Der in Fig. 1 gezeigte Querschnitt durch ein Tubenlaminat zeigt von der Tubenaussenseite zur Tubeninnenseite hin den folgenden Aufbau:
- 10a,b,c: PE-Film, coextrudiert, transparent, 110 µm
- 11 a,b: PE-Extrusionskaschierschicht, coextrudiert, transparent, 45/10 µm
- 12/M: Aluminiumfolie, 20 µm, mit Mikroprägung, als Barriereschicht
- 13: E.AA-Copolymer-Extrusionskaschierschicht, 30 µm
- 14: LMDPE-Film, 60 µm

### Beispiel 2

Der in Fig. 2 gezeigte Querschnitt durch ein Tubenlaminat zeigt von der Tubenaussenseite zur Tubeninnenseite hin den folgenden Aufbau:
- 20a,b,c: PE-Film, coextrudiert, transparent, 170 µm
- 21: PE-Lackkaschierschicht, 3 g/m³
- 22: Aluminium, 70nm, aufgedampft auf die Mikroprägung M des PET-Films 23
- 23/M: PET-Film, 12 µm, mit Mikroprägung
- 24: Beschichtung aus SiO_{1,8}, 80 nm, mittels Elektronenstrahl-Bedampfen auf den PET-Film 23 aufgetragen
- 25: PE-Lackkaschierschicht, 3 g/m³
- 26: LMDPE-Film, 90 µm

### Beispiel 3

Der in Fig. 3 gezeigte Querschnitt durch ein Tubenlaminat zeigt von der Tubenaussenseite zur Tubeninnenseite hin den folgenden Aufbau:
- 30a,b,c: PE-Film, coextrudiert, transparent, 110 µm
- 31 a.b: PE-Extrusionskaschierschicht, coextrudiert, transparent, 45/10 µm
- 32: Aluminium, 70nm, aufgedampft auf die Mikroprägung M des PET-Films 33
- 33/M: PET-Film, 12 µm, mit Mikroprägung
- 34: Barriereschicht aus SiO_{1,8}, 80 nm, mittels Elektronenstrahl-Bedampfen auf den PET-Film 33 aufgetragen
- 35: Chromschicht als Haftvermittler, 0,5 nm, auf die Barriereschicht 34 durch Sputtern aufgetragen
- 36: E.AA-Copolimer-Extrusionskaschierschicht, 30 µm
- 37: LMDPE-Film, 60 µm

### Beispiel 4

Der in Fig. 4 gezeigte Querschnitt durch ein Tubenlaminat zeigt von der Tubenaussenseite zur Tubeninnenseite hin den folgenden Aufbau:
- 40a,b,c: PE-Film, coextrudiert, transparent, 110 µm
- 41a,b: PE-Extrusionskaschierschicht, coextrudiert, transparent, 45/10 µm
- 42: Aluminium, 70nm, aufgedampft auf die Mikroprägung M des PET-Films 43
- 43/M: PET-Film, 12 µm, mit Mikroprägung
- 44: E.AA-Copolymer-Extrusionskaschierschicht, 30 µm
- 45: Aluminiumfolie, 20 µm, als Barriereschicht
- 46: E.AA-Copolymer-Extrusionskaschierschicht 30 µm
- 47: LMDPE-Film, 60 µm

### Beispiel 5

Der in Fig.5 gezeigte Querschnitt durch ein Tubenlaminat zeigt von der Tubenaussenseite zur Tubeninnenseite hin den folgenden Aufbau:
- 50a,b,c,d: PE-Film, coextrudiert, transparent, 110 µm, mit Teilschicht 50d für die Mikroprägung M
- 51: Aluminium, 70nm, aufgedampft auf die Mikroprägung der Teilschicht 50d des PE-Films
- 52a,b: PE-Extrusionskaschierschicht, coextrudiert, 45/10 µm
- 53/M: Aluminiumfolie, 20 µm, als Barriereschicht
- 54: E.AA-Copolymer-Extrusionskaschierschicht, 30 µm
- 55: LMDPE-Film, 60 µm

## Patentansprüche

1. Verfahren zur Herstellung eines mehrschichtigen Tubenmaterials, mit einer zwischen Kunststoffschichten (10, 14; 20, 26; 30, 37; 40, 47; 50, 55)) angeordneten, den Durchtritt von Wasserdampf und Gasen hemmenden Barriereschicht (12, 24, 34, 45, 53) und mit einem in einer der Schichten (12, 23, 33, 43, 50d) des Tubenmaterials durch eine Mikroprägung (M) erzeugten Hologramm, bei welchem Verfahren die einzelnen Schichten zum mehrschichtigen Tubenmaterial zusammengefügt werden,
**dadurch gekennzeichnet, dass**
die zur Aufnahme des Hologramms vorgesehene Schicht (12, 23, 33, 43, 50d) als Folie geprägt und die mit dem Hologramm versehene Folie mit den weiteren Schichten zum Tubenmaterial verbunden wird.

2. Verfahren nach Anspruch 1, **dadurch gekennzeichnet, dass** die zu prägende Folie eine als Barriereschicht dienende Metallfolie (12), vorzugsweise eine Aluminiumfolie, ist.

3. Verfahren nach Anspruch 1, **dadurch gekennzeichnet, dass** die zu prägende Folie eine Kunststofffolie (23, 33) mit einer einseitig angeordneten Barriereschicht (24, 34), vorzugsweise eine keramische Beschichtung aus SiOₓ, ist, wobei die Folie (23, 33) auf der der Barriereschicht (24, 34) entgegengesetzten Seite geprägt und auf dem geprägten Muster (M) eine Schicht aus Metall (22, 32), vorzugsweise aus Aluminium, angeordnet ist.

4. Verfahren nach Anspruch 1, **dadurch gekennzeichnet, dass** die zu prägende Folie eine Kunststofffolie (43, 50d) ist und auf dem geprägten Muster (M) eine Schicht aus Metall (42, 51), vorzugsweise aus Aluminium, angeordnet ist, wobei als Barriereschicht eine Metallfolie (45, 53), vorzugsweise eine Aluminiumfolie, angeordnet ist.

## Claims

1. Process for the production of a multi-layer tube material with a barrier layer (12, 24, 34, 45, 53) preventing the passage of water vapour and gases arranged between plastic layers (10, 14; 20, 26; 30, 37; 40, 47; 50, 55) and a hologram produced in one of the layers (12, 23, 33, 43, 50d) of the tube material by microembossing (M), in which process the individual layers are joined together to form the multi-layer tube material, **characterised in that** the layer (12, 23, 33, 43, 50d) in the form of a film intended to receive the hologram is embossed and the film provided with the hologram is joined to the other layers to form the tube material.

2. Process according to claim 1, **characterised in that** the film to be embossed is a metal foil (12), preferably an aluminium foil, serving as a barrier layer.

3. Process according to claim 1, **characterised in that** the film to be embossed is a plastic film (23, 33) with a barrier layer (24, 34), preferably a ceramic coating of SiOₓ, arranged on one side, the film (23, 33) being embossed on the side opposite the barrier layer (24, 34) and a layer of metal (22, 32), preferably aluminium, being arranged on the embossed pattern (M).

4. Process according to claim 1, **characterised in that** the film to be embossed is a plastic film (43, 50d) and a layer of metal (42, 51), preferably aluminium, is arranged on the embossed pattern (M), a metal foil (45, 53), preferably an aluminium foil, being provided as a barrier layer.

## Revendications

1. Procédé de fabrication d'un matériau tubulaire multicouches, avec une couche barrière (12, 24, 34, 45, 53) disposée entre des couches plastiques (10, 14 ; 20, 26 ; 30, 37 ; 40, 47 ; 50, 55), empêchant la pénétration de la vapeur d'eau et des gaz, et avec un hologramme produit par un microgaufrage (M) dans une des couches (12, 23, 33, 43, 50d) du matériau tubulaire, procédé dans lequel les différentes couches sont rassemblées en un matériau tubulaire multicouche, **caractérisé en ce que** la couche prévue pour recevoir l'hologramme (12, 23, 33, 43, 50d) est gaufrée sous forme de feuille et la feuille dotée de l'hologramme est reliée aux autres couches pour donner un matériau tubulaire.

2. Procédé selon la revendication 1, **caractérisé en ce que** la feuille à gaufrer est une feuille métallique (12) servant de couche barrière, de préférence une feuille d'aluminium.

3. Procédé selon la revendication 1, **caractérisé en ce que** la feuille à gaufrer est une feuille de plastique (23, 33) ayant une couche barrière (24, 34), disposée sur une face, de préférence un revêtement céramique en SiOₓ, la feuille (23, 33) étant gaufrée sur la face opposée à la couche barrière (24, 34) et une couche en métal (22, 32), de préférence en aluminium, étant disposée sur le motif gaufré (M).

4. Procédé selon la revendication 1, **caractérisé en ce que** la feuille à gaufrer est une feuille en plastique (43, 50d) et une couche en métal (42, 51), de préférence en aluminium, est disposée sur le motif gaufré (M), une feuille métallique (45, 53), de préférence une feuille en aluminium, étant disposée à titre de couche barrière.
